# EUROPEAN PATENT APPLICATION

(11) **EP 2 020 549 A1**
(43) Date of publication of application: **04.02.2009**
(21) Application number: 08155418.0
(22) Date of filing: 29.04.2008
(51) Int. Cl.: F16K 15/03

(54) **Check valves with hinge shafts retained by locking pins**

(30) Priority: 31.07.2007 US 831482
(71) Applicant: Honeywell International, Inc., Morristown NJ 07962 (US)
(72) Inventor: Sugai, Maureen, Phoenix, AZ 85048 (US); Tornquist, David B., Chandler, AZ 85226 (US); Schlarman, Chris L., Chandler, AZ 85226 (US); Kolic, Michael, Phoenix, AZ 85015 (US); Dulay, Ralph L., Chandler, AZ 85225 (US)
(74) Representative: Buckley, Guy Julian

(57) **Abstract**

A check valve includes a valve body defining a flow passage therethrough; a hinge shaft (126) mounted on the valve body (102); a closure element (122) pivotally mounted on the hinge shaft (126) for opening and closing the flow passage; and a pin (154) secured to the valve body (102) and received by the hinge shaft (126).

## Description

This invention was made with Government support under Contract Number N00019-02-C-3002 of the Joint Strike Fighter Program. The Government has certain rights in this invention

### TECHNICAL FIELD

The present invention generally relates to check valves with flapper closure elements, and more particularly relates to methods and apparatus for retaining the hinge shaft on which the closure elements of check valves are pivotally mounted.

### BACKGROUND

Check valves with flapper (or "wafer") type closure elements are utilized in many industries. The check valves are typically mounted in pipes or other such conduits enable fluid flow in one direction and prevent fluid flow in the opposite direction. The closure elements of the check valve are pivotally mounted on a hinge shaft and can be biased closed by a resilient element such as a hinge spring. The hinge shaft is typically mounted by press fitting the ends of the hinge shaft in through holes formed in a valve body. The valve body is then mounted in a pipe or conduit, for example, to enable air intake for an engine of an aircraft.

Conventional check valves can encounter problems because the hinge shaft may loosen and migrate out of the valve body. This issue is exacerbated by the high temperature and vibration environments of many types of check valves, particularly where there is a clearance between the valve body and the walls of the conduit in which it is mounted.

Accordingly, it is desirable to provide methods and apparatus for satisfactory retaining hinge shafts in check valves. In addition, it is desirable to provide check valves that securely retain their hinge shafts in high temperature and vibration environments. Furthermore, other desirable features and characteristics of the present invention will become apparent from the subsequent detailed description of the invention and the appended claims, taken in conjunction with the accompanying drawings and this background of the invention.

### BRIEF SUMMARY

In accordance with one exemplary embodiment, a check valve includes a valve body defining a flow passage therethrough; a hinge shaft mounted on the valve body; a closure element pivotally mounted on the hinge shaft for opening and closing the flow passage; and a pin secured to the valve body and received by the hinge shaft.

In accordance with another exemplary embodiment, a method of retaining a hinge shaft with a longitudinal axis in a check valve is provided. The method includes inserting a pin in a hole in the hinge shaft; and securing the pin to a valve body of the check valve to prevent movement of the hinge shaft along to the longitudinal axis.

In accordance with yet another exemplary embodiment, a check valve includes a valve body defining a flow passage and a bore; a hinge shaft including first and second end portions mounted on the valve body, the first end portion including a hole on the circumferential surface; a closure element pivotally mounted on the hinge shaft for opening and closing the flow passage; and a pin at least partially housed in the bore and received by the hole in the hinge shaft to retain the hinge shaft in a longitudinal direction.

### BRIEF DESCRIPTION OF THE DRAWINGS

The present invention will hereinafter be described in conjunction with the following drawing figures, wherein like numerals denote like elements, and wherein:

FIG. 1 is an isometric view of a check valve in accordance with an exemplary embodiment;

FIG. 2 is a cross-sectional view of the check valve of FIG. 1 through line 2-2;

FIG. 3 is a cross-sectional view of the check valve of FIG. 1 through line 3-3; and

FIG. 4 is a more detailed view of a portion of FIG. 3.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

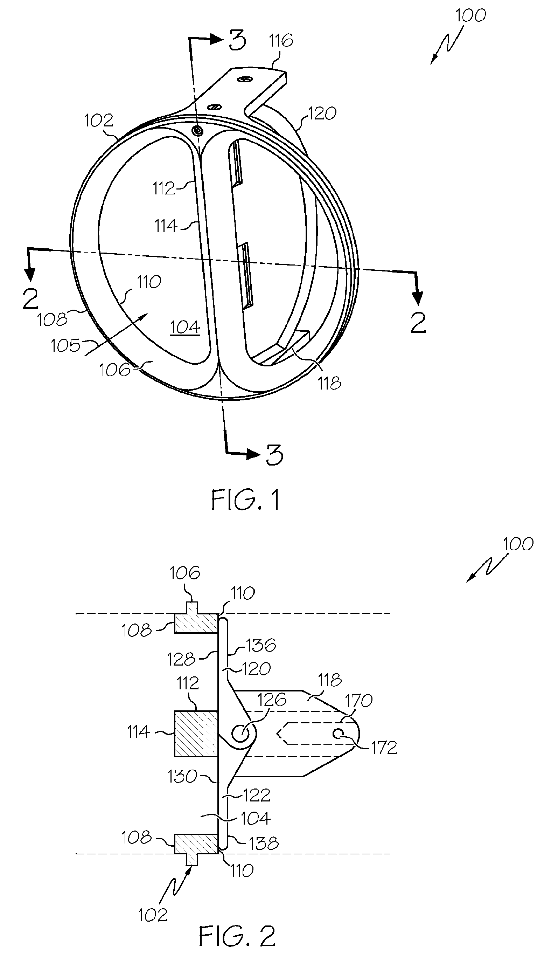

FIG. 1 is an isometric view of a check valve 100 in accordance with an exemplary embodiment. The check valve 100 includes a valve body 102 having an annular configuration defining a central flow passage 104. The valve body 102 can be coupled to or within a pipe or conduit (not shown) to enable fluid flow into the pipe or conduit through the flow passage 104 in direction 105. As will be discussed in further detail below, the check valve 100 is urged open by fluid flowing in the direction 105 while preventing fluid from flowing out of the check valve 100 in an opposite direction.

The valve body 102 has an annular flange 106 that defines the flow passage 104 and that includes an upstream surface 108 and a downstream surface 110. In one embodiment, the flow passage 104 is about 7 inches in diameter, although other sizes may be utilized depending on the specific application. The valve body 102 further includes a transverse post 112 that extends diametrically across the flow passage 104. Generally, the transverse post 112 has an upstream surface 114 that is coplanar with the upstream surface 108 of the annular flange 106. The valve body 102 also includes first and second flanges 116 and 118, respectively, that extend perpendicularly to the plane of the annular flange 106.

As best shown in FIG. 2, which is a cross-sectional view of the check valve 100 of FIG. 1 through line 2-2, two generally flat valve closure elements 120 and 122 (also referred to as "flappers" or "wafers"), each shaped generally like one-half of a circular disc, are pivotally mounted on a hinge shaft 126. The closure elements 120 and 122 are preferably identical, having flat and smooth upstream surfaces 128 and 130 and downstream surfaces 136 and 138. In alternate embodiments, the closure elements 120 and 122 can be replaced by a greater or fewer number of closure elements, and/or the closure elements can have different shapes other than the semicircular shape in the depicted embodiment.

As described in further detail below, the closure elements 120 and 122 are resiliently biased into a closed position in which the upstream surfaces 128 and 130 of the closure elements 120 and 122 come to a fluid-tight rest against the downstream surface 110 of the annular flange 106, thus completely shutting off flow through the check valve 100. When the closure elements 120 and 122 are in their fully open position, as illustrated by the dashed image 170 of FIG. 2, the closure elements 120 and 122 rest against a stop 172 mounted in between the first and second flanges 116 and 118 generally parallel and downstream to the transverse post 112 and the hinge shaft 126.

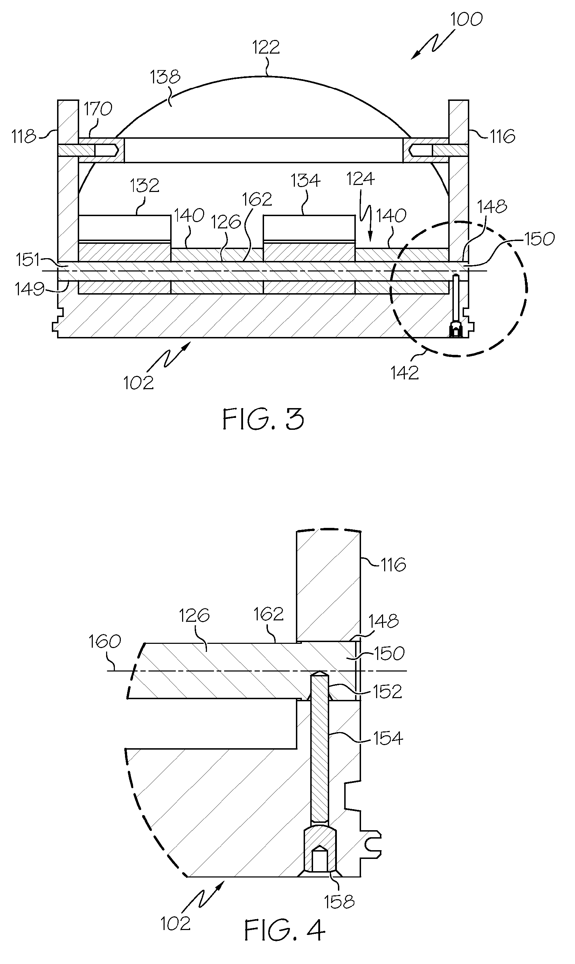

As best shown in FIG. 3, which is a cross-sectional view of the check valve 100 of FIG. 1 through line 3-3, the hinge shaft 126 has end portions 150 and 151 mounted and secured in holes 148 and 149 formed in the first and second flanges 116 and 118. The hinge shaft 126 is generally cylindrical and has a circumferential surface 162, although other configurations and cross-sectional shapes, such as square or hexagonal, can be provided. Generally, both holes 148 and 149 are through holes, although one or more of the holes 148 and 149 can be blind holes. The hinge shaft 126 extends across the flow passage 104, generally parallel to the transverse post 112. The mechanism for retaining the hinge shaft 126 in holes 148 and 149 of the flanges 116 and 118 is discussed in further detail below.

The hinge 124 can include a helical spring 140 surrounding the hinge shaft 126. The helical spring 140 includes two ends 132 and 134 that bear against the downstream surfaces 136 (not shown in FIG. 3) and 138 of the closure elements 120 (not shown in FIG. 3) and 122, respectively, to bias them into their closed position (such as shown in FIG. 2). The force exerted by the helical spring 140 against the closure elements 120 and 122 is sufficient to hold them generally in the closed position, and to facilitate their automatic closure when fluid is not flowing through the valve, thereby preventing undesired reversed flow through the valve in the upstream direction. In an alternate embodiment, the helical spring 140 can be replaced by another resilient element, or omitted such that the valve is biased closed by gravity or air pressure.

FIG. 4 illustrates circled portion 142 (FIG. 3) of the check valve 100 in greater detail. Particularly, FIG. 4 illustrates how the hinge shaft 126 is mounted and secured in the first flange 116. As noted above, one end portion 150 of the hinge shaft 126 is inserted into hole 148 in the first flange 116. The end portion 150 of the hinge shaft 126 has a hole 152 formed on the circumferential surface 162. The hole 152 is configured to receive a locking pin 154 inserted through a bore 156 in the valve body 102 that is aligned with the hole 152. The locking pin 154 is generally inserted at an approximately 90° angle to a longitudinal axis 160 of the hinge shaft 126, although any angle between 45° and 135°, and preferably 80° and 100°, can be provided. The locking pin 154 prevents the hinge shaft 126 from moving along the longitudinal axis 160, thus preventing the hinge shaft 126 from migrating out of the hole 148 and out of the valve body 102. The locking pin 154 also prevents rotation of the hinge shaft 126 about its longitudinal axis.

The locking pin 154 is securely retained in the bore 156 by a plug 158. The plug 158 can be a cap screw retained in the bore 156 with cooperating screw threads on the plug 158 and in the bore 156.

In an alternate embodiment, the hole 152 in the hinge shaft 126 can be replaced by a slot or circumferential groove. Moreover, in another embodiment, a bushing (not shown) can be provided in the hole 148 that receives the hinge shaft 126. In this embodiment, the bushing includes a hole that corresponds to the hole 152 though which the locking pin 154 extends. The bushing can provide additional support for the hinge shaft 126 along the longitudinal axis 160. In a further embodiment, a second locking pin (not shown) can also be provided in the other end portion 151 of the hinge shaft 126, or the other end portion 151 of the hinge shaft 126 can simply be inserted into the hole 149 of the second flange 118. Moreover, in another alternate embodiment, the hinge shaft 126 can be welded to the valve body 102 at the first end portion 150 and/or the second end portion 151, or the bushing that retains the hinge shaft 126 can be welded to the valve body 102.

The locking pin 154 enables the hinge shaft 126 to be retained without a substantial change to the weight and/or space requirements of the check valve 100. Moreover, the locking pin 154 retains the hinge shaft 126 in high temperature and/or vibration environments. The check valve 100 can be manufactured from any suitable metallic or non-metallic material, including plastics and ceramics. In one embodiment, the valve body 102, the closure elements 120 and 122, and the hinge shaft 126 can be manufactured from aluminum, and the locking pin 154 can be manufactured from stainless steel. Generally, the check valve 100 is manufactured to withstand temperatures from about -40° F to about 330°F. Although embodiments have been discussed in connection with check valves, the locking pin 154 can retain a hinge shaft 126 in other types of valves.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A check valve (100), comprising:
a valve body (102) defining a flow passage (104) therethrough;
a hinge shaft (126) mounted on the valve body (102);
a closure element (120,122) pivotally mounted on the hinge shaft (126) for opening and closing the flow passage (104); and
a pin (154) secured to the valve body (102) and received by the hinge shaft (126).

2. The check valve of claim 1, wherein the pin (154) engages the hinge shaft (126) to prevent movement thereof in a longitudinal direction.

3. The check valve of claim 1, wherein the hinge shaft (126) has a circumferential surface extending in a longitudinal direction, and wherein the hinge shaft (126) engages the pin (154) at the circumferential surface.

4. The check valve of claim 1, wherein the valve body (102) comprises a bore (156) for housing the pin (154).

5. The check valve of claim 4, further comprising a plug (158) engaging the bore (156) for securing the pin (154) in the bore (156).

6. The check valve of claim 5, wherein the plug (158) is a cap screw (158) that engages corresponding treads in the bore (156).

7. The check valve of claim 1, wherein hinge shaft (126) has first and second end portions, and wherein the pin (154) is received by the first end portion.

8. The check valve of claim 1, wherein the pin (154) is oriented at 90° to the hinge shaft (126).

9. The check valve of claim 1, wherein the hinge shaft (126) includes a hole (152) for receiving the pin (154).

10. The check valve of claim 1, wherein hinge shaft (126) includes a groove for receiving the pin (154).
